# EUROPEAN PATENT APPLICATION

(11) **EP 2 039 835 A1**
(43) Date of publication of application: **25.03.2009**
(21) Application number: 07739942.6
(22) Date of filing: 27.03.2007
(51) Int. Cl.: E01H 5/02, A01D 34/68, A47L 11/40, A47L 13/20, A47L 13/46, B62B 1/18, B62B 5/06

(54) **SHOULDER BELT TRACTION TYPE HAND-PUSH TOOL**

(30) Priority: 10.07.2006 JP 2006189369; 01.11.2006 JP 2006297987
(71) Applicant: Tanaya, Satoru, Nagaoka Iwanuma-shi Miyagi 989-2461 (JP)
(72) Inventor: Tanaya, Satoru, Nagaoka Iwanuma-shi Miyagi 989-2461 (JP)
(74) Representative: Jacob, Reuben Ellis
(86) International application number: PCT/JP2007/056504
(87) International publication number: WO 2008/007483

(57) **Abstract**

A traction tension bar 5 of a pipe member is connected to an end of a handle 6 of the hand-push tool. A tension bar ring metal member 5E of a ring-shaped metal member is disposed at an end of the tension bar 5 extending backward. A shoulder belt I is connected through a shock absorption spring 3 to the tension bar ring metal member 5E by an attachment hook 4, and can be fitted around the body of the user 600. The user 600 fits the shoulder belt 1 around the body, holds the handle 6 of the hand-push tool with both hands, leans forward and puts their weight into the shoulder belt 1 to produce traction, and starts to walk while putting their weight into the shoulder belt 1 to pull the hand-push tool.

## Description

### BACKGROUND OF THE INVENTION

### FIELD OF THE INVENTION

The present invention relates to a shoulder-belt-traction hand-push tool.

### DESCRIPTION OF THE RELATED ART

Conventionally, many hand-push tools have been invented. For example, highly efficient snow removal tools and snow removal accessories are disclosed (for example, see Japanese Published Unexamined Patent Application No. 2006-169934. Also disclosed are scoop type snow shovels (for example, see Japanese Published Unexamined Patent Application No. H10-231507) with which a series of snow removal operations such as for pushing and separating snow, pushing out snow, collecting snow and scooping and disposing of snow can be performed in an integrated manner; they help reduce the labor of removing snow and streamline snow removal operations and lessen the labor of removing snow. The following hand-push tools are also disclosed: mop handle attaching devices (for example, see Japanese Registered Utility Model No. 3039479) that effectively use force exerted by a user and prevent the mop from falling down; water removal floor wipers mainly for business use (for example, see Japanese Published Unexamined Patent Application No. H10-137165) that can prevent foreign material from leaking due to, for example, disconnection or breakage of components; and hand-push lawnmowers (for example, see Japanese Registered Utility Model No. 3101620) that are provided with ground drive wheels on an opposite body, spiral blades disposed between the bodies and a cover for improving the efficiency of grass collection, that mow the lawn by being moved forward manually with the rotation of the ground drive wheels transmitted to the spiral blades, and that discharge the mowed lawn into a container disposed in front of the spiral blades.

Many technologies for moving a cart by a hand-push tool have been invented. For example in terms of means for controlling an electrically operated cart such as a carriage, the following are disclosed: electrically-operated-cart speed control devices (for example, see Japanese Published Unexamined Patent Application No. 2001-224107 ) that control speed by which the electrically operated cart has a rotation speed corresponding to the number of user's steps detected by a step sensor; power-assisted carts (for example, see Japanese Published Unexamined Patent Application No. 2004-113375) such as wheelchairs, carts or the like that are provided with means for controlling drive motor current and helping improve their linear movement stability, operability and safety in the case that they run on a ramp or the like; and one-wheel carts (for example, see Japanese Published Unexamined Patent Application No.2006-082792) that allow preferable transportation operations through appropriate control of an assist motor without losing operability when they are driven, which leads more efficient use of energy.

### SUMMARY OF THE INVENTION

When the hand-push tools according to Japanese Published Unexamined Patent Application No. 2006-169934. Japanese Published Unexamined Patent Application No. H10-231507, Japanese Registered Utility Model No. 3039479, Japanese Published Unexamined Patent Application No. H10-137165 and Japanese Registered Utility Model No. 3101620 are used, a user holds a support bar or a handle with both hands and performs hand-push operations while walking. However, there was a problem that when the user performs hand-push operations while walking with the snow removal tool and the snow shovel according to Japanese Published Unexamined Patent Application No. 2006-169934, Japanese Published Unexamined Patent Application No. H10-231507, resistance caused by snow places a heavy load on both hands of the user. Moreover, the user needs to lean forward because the user exerts force with both hands. Thus, a heavy burden is imposed on the back of the user, and this may cause pain in the back. Also, there was a problem that when a user performs hand-push operations for a prolonged period with the cleaning mop of Japanese Registered Utility Model No. 3039479 and the water removal wiper of Japanese Published Unexamined Patent Application No. H10-137165, resistance load placed on both hands of the user becomes heavier with time, so the user needs to lean forward in the hand-push operation, and thus a heavy burden is imposed on the back of the user. This causes the user to become extremely fatigued. Further, there was a problem that the hand-push lawnmower of Japanese Registered Utility Model No. 3101620 is too small to mow the lawn in a large area, and thus its efficiency is poor, so when it performs a lawn mowing operation, resistance caused by the lawn imposes a heavy burden on both hands and the back of the user.

As the electrically-operated-cart speed control device, the power-assisted cart and the one-wheel cart according to Japanese Published Unexamined Patent Application No. 2001-224107, Japanese Published Unexamined Patent Application No. 2004-113375 and Japanese Published Unexamined Patent Application No. 2006-082792 are carts driven by electric motors, there was a problem that they do not have the lightness, easy cornering and easy usability of common manually operated carts. Also there was a problem that the carts are heavy due to the use of electric motors and batteries, and they suffer from inconvenience involved in the charging of the batteries, and since the electric motors, the batteries and other control devices are included, the one-wheel cart, the four-wheel cart, the wheelchair and the like are expensive.

In view of the problems described above, an object of the present invention is to provide a shoulder-belt-traction hand-push tool that reduces burdens on the arms and the back of a user, that is inexpensive and easy to handle and that can improve operating efficiency.

To achieve the above object, the shoulder-belt-traction hand-push tool of the present invention is comprised: a traction tension bar of a pipe member, the traction tension bar being attached to an end of a support bar or a handle of the hand-push tool; a tension bar ring metal member of a ring-shaped metal member, disposed at an end of the tension bar extending backward; and having a shoulder belt that can be fitted around a body of a user connected to the tension bar ring metal member through a shock absorption spring by an attachment hook, configured wherein the user fits the shoulder belt around the body, holds the support bar or the handle of the hand-push tool with both hands, leans forward and puts their weight into the shoulder belt to produce traction, and then starts to walk while putting their weight into the shoulder belt such that the hand-push tool is pulled.

The shoulder-belt-traction hand-push tool of the invention is used by being fitted around the body of a user. When the user performs an operation of pulling the hand-push tool, the user holds a support bar or a handle of the hand-push tool with both hands assumes a walking posture and leans forward and puts their weight into the shoulder belt when walking forward. This produces traction, and when the user starts to walk while putting their weight into the shoulder belt, the tension bar is pulled and thus the hand-push tool is pulled.

With a conventional hand-push tool, since a resistance load is produced when a hand-push operation is performed, a heavy load is placed on both arms of the user. But, with the shoulder-belt-traction hand-push tool of the present invention, the user does not need to push it with both arms, instead a tension bar extending backward is pulled by a shoulder belt fitted around the body of the user and the hand-push tool moves forward. Thus, it is unnecessary to significantly stand firm, and it is possible to easily perform an operation in a comfortable posture and reduce the resistance load placed on both arms. Also, it is unnecessary to lean forward and thus a burden imposed on the back can be reduced. In this way, it is possible to reduce the labor of the user, provide easy handling and improve operation efficiency.

By using a shock absorption spring provided between the shoulder belt and the tension bar, it is possible to reduce the impact transmitted from both the hand-push tool during the operation and the back-and-forth swinging movement of the user when the user walks. In the case where the hand-push tool is composed of a cart, as compared with an electric motor operated cart, hand-push tool is a simple device, does not require a battery and reduces production costs and operation costs such maintenance costs.

The shoulder-belt-traction hand-push tool of the present invention can be applied to any hand-push tool that is operated by being pushed with hands from behind, such as a hand-push cart, a hand-push snow removal tool such as a scoop type snow shovel, a cleaning mop, a water removal wiper, a hand-push lawnmower, a four-wheel cart, a wheelchair and a baby carriage. Preferably, the tension bar is formed by a single pipe into a compact form by a pipe molding machine. In this case, an ideal shape and an ideal length may be obtained. Also, the tension bar may be foldable and slidable into a compact form.

The shoulder-belt-traction hand-push tool of the present invention is preferably composed such that the support bar or the handle of the hand-push tool is extended about 10 cm. Since a resistance load placed on both arms is reduced, the support bar or the handle of the hand-push tool can be extended about 10 cm, and the user is freed from an uncomfortable posture due to hand-pushing.

The shoulder-belt-traction hand-push tool of the prevent invention may be composed of a hand-push snow removal tool. The shoulder-belt-traction hand-push tool of the present invention may be composed of a cleaning mop or a water removal wiper and may further comprise a side bar handle provided between a support bar of the scoop type snow shovel, the cleaning mop or the water removal wiper and the tension bar, so as to control the direction thereof when a snow removal operation or a cleaning operation is performed while the user is walking. In this case, by holding the side bar handle with one hand, it is possible to easily control the direction when a snow removal operation or a cleaning operation is performed while the user is walking.

The shoulder-belt-traction hand-push tool of the present invention may be composed of a hand-push lawnmower. A conventional lawnmower is compact, and when it mows the lawn in a large area, its efficiency is poor and such an operation is time-consuming, but with the shoulder-belt-traction hand-push tool of the present invention, it is possible to reduce the labor of the user. Thus, it is possible to make the conventional lawnmower larger, and this makes it possible to reduce the operating period of lawnmowing, and improve operation efficiency.

The shoulder-belt-traction hand-push tool of the present invention may be composed of a one-wheel cart, and a wheel may be shifted about 10 cm backward with respect to the position of a bucket of the one-wheel cart such that the center of gravity of the one-wheel cart is shifted backward. Conventionally, when a one-wheel cart is moved by lifting and pushing a handle with both hands, a wheel is disposed in the front portion of a bucket in order to maintain a balance. Thus, due to the resultant load of the weight of the load put on both arms and a pushing force produced when the one wheel cart is moved, a heavy load is placed on both arms of a user. In contrast, in the shoulder-helt-traction cart of the present invention, the tension bar extending behind the handle of the one-wheel cart is pulled by the shoulder belt, and thus the one-wheel cart is pushed straight. This provides a good balance in a lateral direction and in a forward direction. Thus, it is possible to shift the wheel about 10 cm backward with respect to the position of a bucket of the one-wheel cart. Since the center of gravity of the one-wheel cart is shifted backward, the load weight of the load placed on both arms of a user can be reduced. This makes it possible to reduce the load involved in a hand-push operation, and so the user is freed from an uncomfortable posture while walking.

The shoulder-belt-traction hand-push tool of the present invention may be composed of a two-wheel cart, and may further have a lead with one end thereof linked to the shoulder belt and the other end thereof connected to the rear portion of the two-wheel cart so as to prevent the hands from being separated from the handle of the two-wheel cart on a slope. Although the two-wheel cart is stable in a lateral direction and a heavier load can be mounted when the center of gravity of the two-wheel cart is shifted backward, the weight of the load is directly placed on both arms of the user when the two-wheel cart moves down on a slope and the hands may be separated from a handle grip portion. Therefore by fitting a lead for a slope to the body of the user through the shoulder belt, the dead weight of the two-wheel cart and the load can be directed to the body, and this makes it possible to prevent the hands from being separated from the handle.

The shoulder-belt-traction hand-push tool of the present invention may be composed of a four-wheel cart. Here, the position of the handle of the four-wheel cart may be extended about 10 cm upward. It is possible to reduce the load placed on both arms, and as it is unnecessary for a user to lean forward. It is possible to extend the position of the handle of the four-wheel cart about 10 cm upward. This allows the user to use the handle of the four-wheel cart only for the purpose of controlling the direction of the four-wheel cart and so the user is freed from an uncomfortable posture due to the hand-pushing.

According to the present invention, a shoulder-belt-traction hand-push tool that reduces burdens on the arms and the back of a user, that is inexpensive and easy to handle and that can improve operating efficiency is provided.

### BRIEF DESCRIPTION OF DRAWINGS

FIG. 1 is a perspective view showing a state in which a shoulder-belt-traction hand-push tool according to an embodiment of the present invention is used when it is composed of a large snow removal tool;
FIG. 2 is an enlarged perspective view showing a state, as seen from behind, in which the shoulder-belt-traction hand-push tool shown in F1G. 1 is used;
FIG. 3 is a perspective view showing a state in which a shoulder-belt-traction hand-push tool according to an embodiment of the present invention is used when it is composed of a small snow removal tool;
FIG. 4 is a perspective view showing a state in which a shoulder-belt-traction hand-push tool according to an embodiment of the present invention is used when it is composed of a cleaning mop;
FIG. 5 is a perspective view showing a state in which a shoulder-belt-traction hand-push tool according to an embodiment of the present invention is used when it is composed of a cleaning water removal wiper;
FIG. 6 is a perspective view showing a state in which a shoulder-belt-traction hand-push tool according to an embodiment of the present invention is used when it is composed of a hand-push lawnmower;
FIG. 7 is a perspective view showing a state in which a shoulder-belt-traction hand-push tool according to an embodiment of the present invention is used when it is composed of a one-wheel cart;
FIG. 8 is an enlarged perspective view showing a state, as seen from behind, in which the shoulder-belt-traction hand-push tool shown in FIG. 7 is used;
FIG. 9 is an enlarged perspective view showing a state in which the cart of the shoulder-belt-traction hand-push tool shown in FIG. 7 is removed;
FIG. 10 is a perspective view showing a state in which a shoulder-belt-traction hand-push tool according to an embodiment of the present invention is used when it is composed of a two-wheel cart;
FIG. 11 is is perspective view showing a state in which a shoulder-belt-traction hand-push tool according to an embodiment of the present invention is used when it is composed of a four-wheel cart;
FIG. 12 is a perspective view showing a state in which a shoulder-belt-traction hand-push tool according to an embodiment of the present invention is used when it is composed of a wheelchair,
FIG. 13 is a perspective view showing a state in which a shoulder-belt-traction hand-push tool according to an embodiment of the present invention is used when it is composed of a baby carriage.

### EXPLANATION OF LETTERS AND NUMERAL

- 1: Shoulder belt
- 1A: Shoulder belt hook
- I B: Shoulder belt tackle
- 1C: Shoulder belt pad
- 2: Ring
- 2A: Ring
- 3: Shock absorption spring
- 3A: Shock absorption spring stopper
- 3B: Shock absorption spring stopper fixing section
- 4: Attachment hook
- 5: Tension bar
- 5A: Tension bar connection section
- 5B: Tension bar stopper metal member
- 5C: Tension bar intervening metal member
- 5D: Tension bar elbow
- 5E: Tension bar ring metal member
- 5F: Tension bar front component
- 5G: Tension bar rear component
- 6: Handle
- 6A: Side bar handle
- 6B: Handle grip portion
- 6C: About 10 cm extension
- 6D: Extension handle
- 7: Support bar
- 8: Wheel
- 8A: Attachment shift wheel portion
- 9: Main body angle
- 9A: Wheel main shaft angle bar
- 9B: Wheel angle column
- 9C: Extended wheel angle column
- 9D: Rear pipe angle
- 10: Step
- 10A: Extended step
- 11: Lead
- 100: Large snow removal tool
- 200: Small snow removal tool
- 300: Cleaning mop
- 400: Cleaning water removal wiper
- 500: Hand-push operated lawnmower
- 600: User
- 700: One-wheel cart
- 701: Block
- 710: Two-wheel cart
- 720: Four-wheel cart
- 730: Wheelchair
- 740: Baby carriage

### DETAILED DESCRIPTION OF THE INVENTION

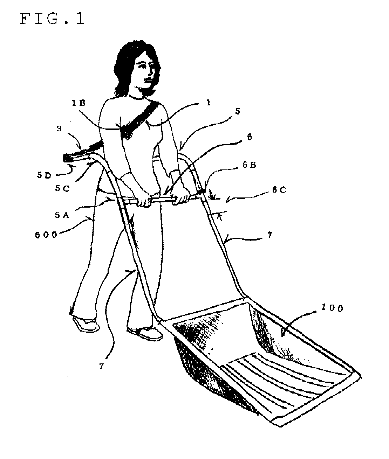

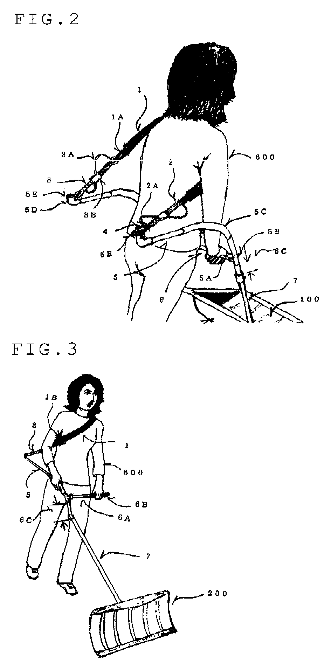

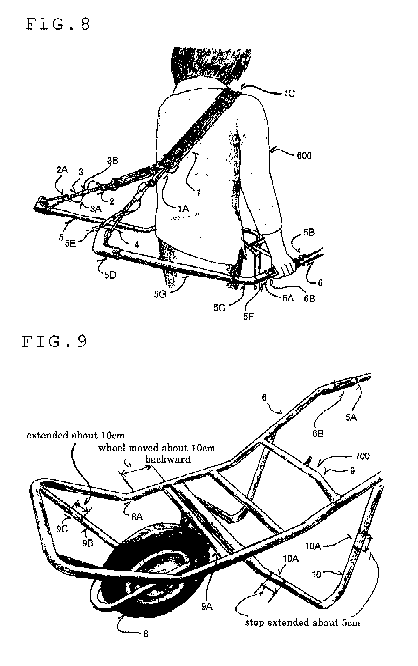

Embodiments of the present invention will be described below with reference to the accompanying drawings. FIGS. 1 to 13 shows the shoulder-belt-traction hand-push tool according to the embodiments of the invention. As shown in FIGS. 1 and 2, the shoulder-belt-traction hand-push tool is composed of a large snow removal tool 100.

As shown in FIG. 1, in the large snow removal tool 100, one end of a tension bar 5 of a pipe member is inserted into a hollow tension bar connection section 5A disposed at both ends of a handle 6. A tension bar elbow 5D of the L-shaped pipe member is attached to the other end of the tension bar 5 connected by a tension bar intervening metal member 5C. A tension bar ring metal member 5E of the ring-shaped metal member as a connecting section or, to a shoulder belt 1 is attached to both tension bar elbow 5D fitted to the tension bar 5. The shoulder belt 1 of the ring-shaped member has a shoulder belt tackle 1B that can adjust the shoulder belt 1 in length, and both ends of shoulder belt hook 1A disposed at the end of the shoulder belt 1 are connected to a ring 2 of a right and left ring-shaped wire members. One end of a shock absorption spring 3 is connected to the ring 2. and the other end thereof is connected to a ring 2A. Further Attachment hook 4 of a gourd-shaped member is linked to the ring 2A, and the attachment hook 4 is connected to the tension bar ring metal member 5E of the ring-shaped metal member.

The tension bar 5 of the pipe metal member as a member of the large snow removal tool 100 is inserted into the hollow tension bar connection section 5A disposed at the right and left end of the handle 6 of the large snow removal tool 100, and are attached by a tension bar stopper metal member 5B. Further the tension bar intervening metal member 5C bent in a dogleg shape is inserted and connected to the tension bar 5 such that the attachment position of the shoulder belt 1 and force applied to the tension bar 5 is effective, with the result that the portion of the tension bar 5 located behind a user 600 is horizontal. The tension bar elbow 5D of the L-shaped pipe member is attached to the end of the tension bar 5, and the tension bar ring metal member 5E of the ring-shaped metal member and serves as a connecting section to the shoulder belt 1 is attached to the tension bar elbow 5D.

The shoulder belt 1 of the ring-shaped member is provided with the shoulder belt tackle 1B that can adjust the length of the shoulder belt I according to the size of the users body when the user performs an operation while walking with the large snow removal tool 100. The shoulder belt hook 1A is provided at both ends of the shoulder belt 1, and is connected to the ring 2 of the ring-shaped wire members.

One end of the shock absorption spring 3 is connected to the ring 2 of the ring-shaped wire member, and the other end thereof is connected to the ring 2A of the ring-shaped wire member. The shock absorption spring 3 is provided with a shock absorption spring stopper 3A of a wire member. The shock absorption spring stopper 3A of the wire member is twice as long as the shock absorption spring 3. Since the shock absorption spring stopper 3A sags and becomes an obstruction, a shock absorption spring stopper fixing section 3B of the pipe member is inserted into the perimeters of the shock absorption spring 3, and the middle of the shock absorption spring stopper 3A is covered and fixed by the shock absorption spring stopper fixing section 3B. The shock absorption spring 3 is designed to reduce resistance load rapidly produced during a snow removal operation.

The attachment hook 4 of the gourd-shaped member is linked to the ring 2A of the ring-shaped wire members. The removable attachment hook 4 of the gourd-shaped members is connected to the tension bar ring metal member 5E of the ring-shaped metal member and fitted to the tension bar 5, and thus the traction exerted by the shoulder belt 1 fitted around the body of the user 600 is transmitted to the tension bar 5 of the pipe members.

The traction transmitted to the tension bar 5 of the pipe member becomes a push force through the tension bar 5 and can move the large snow removal tool 100 forward. Also, since the tension bar 5 pulls the large snow removal tool 100, a heavy load is not placed on both arms and thus it is unnecessary for the user 600 to lean forward when performing an operation while walking. Hence, a support bar 7 and the handle 6 can be extended about 10 cm (indicated by reference numeral 6C in the figure). Thus, it is possible to perform the operation while walking in comfortable posture.

As shown in FIG. 3, the shoulder-belt-traction hand-push tool may be composed of a small snow removal tool 200 such as a scoop type snow shovel. The small snow removal tool 200 is compact, and as the structure a tension bar 5 is connected to the support bar 7 of the small snow removal tool 200. A shoulder belt 1 connected to the tension bar 5 is fitted around the body of the user 600, and the small snow removal tool 200 is pulled by the body of the user 600. Also, since a side bar handle 6A is provided between the support bar 7 and the tension bar 5, the user 600 can stably control the direction of the small snow removal tool 200 by holding a handle grip portion 68 when performing a snow removal operation while walking.

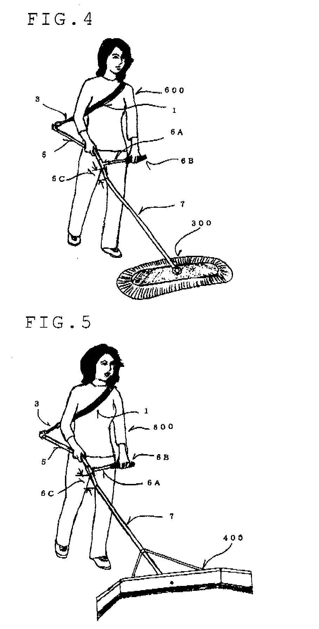

As shown in FIG. 4, the shoulder-belt-traction hand-push tool may be composed of a cleaning mop 300. Cleaning mops are used in large facilities and a prolonged period of; labor is required for performing a hand-pushing with a cleaning mop therein. In order to reduce such a labor load, it is possible to use the shoulder-belt-traction hand-push tool composed of the cleaning mop 300. As a structure, the tension bar 5 of the pipe member is connected to the support bar 7 of the cleaning mop 300. A shoulder belt 1 connected through the shock absorption spring 3 to the tension bar 5 is fitted around the body of the user 600, and the cleaning mop 300 is pulled by the body of the user 600. Also, since a side bar handle 6A is provided between the support bar 7 and the tension bar 5, the user 600 can control the direction of the cleaning mop 300 by holding the handle grip portion 6B.

As shown in FIG. 5, the shoulder-belt-traction hand-push tool may be composed of a cleaning water removal wiper 400. Conventionally, the cleaning water removal wiper 400 is operated by hand-pushing, but by employing the shoulder-belt-traction hand-push tool system and pulling the cleaning water removal wiper 400 with the shoulder belt I it is possible to reduce the labor. Moreover, by being freed from the hand-push posture, the user can comfortable perform a cleaning operation without leaning forward. As a structure tension bar 5 of the pipe member is connected to the support bar 7 of the cleaning water removal wiper 400. The shoulder belt I connected through the shock absorption spring 3 by the attachment hook 4 to the tension bar 5 of the pipe member is fitted around the body of the user 600, and the cleaning water removal wiper 400 is pulled by the body of the user 600. Also, since the side bar handle 6A is provided between the support bar 7 and the tension bar 5, the user 600 can control the direction of the cleaning water removal wiper 400 by holding the handle grip portion 6B.

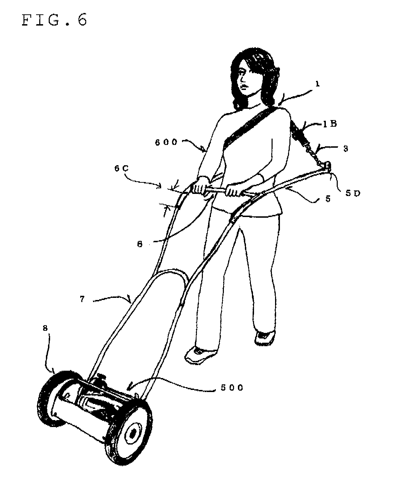

As shown in FIG. 6, the shoulder-belt-traction hand-push tool may be composed of a large hand-push lawnmower 500. Hand-push lawnmowers are used in various places such as house gardens and public parks, and do not require an electrical cord like electric lawnmowers, and produce little noise, unlike motorized lawnmowers. However, the amount of labor required for the user to perform a hand-push operation is increased. On the other hand, with the hand-push lawnmower 500 of the shoulder-belt-traction hand-push tool system the labor can be reduced and the operation can be performed comfortably. As a structure, tension bar 5 of the pipe member is connected to the handle 6 of the hand-push lawnmower 500. A shoulder belt 1 connected through a shock absorption spring 3 to the tension bar 5 is fitted around the body of the user 600, and the hand-push lawnmower 500 is pulled by the body of the user 600. Further, due to the shoulder belt traction system, a heavy load is not placed on both arms of the user, and the handle 6 can be extended about 10 cm (indicated by reference numeral 6C in the figure). Thus, the user 600 is freed from an uncomfortable posture during operation.

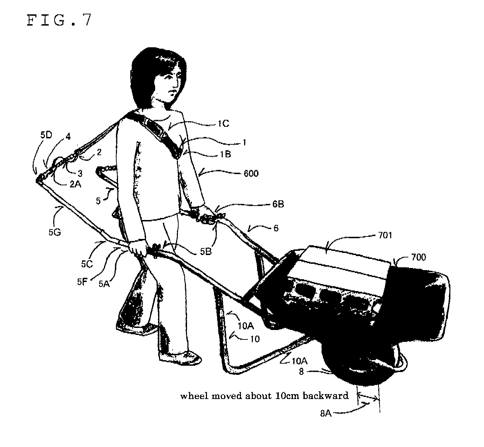

As shown in FIGS. 7 to 9, the shoulder-belt-traction hand-push tool may be composed of a one-wheel cart 700. In this case, with respect to supporting tension bar 5 of the pipe metal member as a member forming the one-wheel cart 700, one end of tension bar front component 5F (about 20 cm in length) of the pipe member is inserted into the hollow tension bar connection section 5A located in the handle grip portion 6B of the one-wheel cart 700, and is attached by tension bar stopper metal member 5B. Further, since the supporting tension bar 5 is raised up to the middle of the back of the user 600 due to the attached position of a shoulder belt 1, the tension bar intervening metal member 5C of the dogleg-shaped pipe member about 17 cm in length is linked to the tension bars 5, and a tension bar rear component 5G of the pipe members about 37 cm in length is linked to the tension bar intervening metal member 5C. The end of the tension bar rear component 5G is connected to tension bar elbow 5D of the dogleg-shaped pipe member, and a tension bar ring metal member 5H of the ring-shaped metal member as a connecting section to the shoulder belt 1 is connected to the tension bar elbow 5D.

The shoulder belt I of the ring-shaped member is provided with a shoulder belt pad 1C so as not to cut into the body of the user 600 due to the weight of the one-wheel cart 700 and blocks 701 (load) during an operation. A shock absorbing spring 3 is designed to reduce the impact of the one-wheel cart 700 against a road surface and the weight of the block 701 (load).

In order to prevent the load of the blocks (load) 701 from being placed on both arms of the user 600, a wheel main shaft angle bar 9A of the pipe member is shifted about 10 cm backward, and right and left wheel angle columns 9B holding the wheel main shaft angle bar 9A are extended about 5 cm, with the result that the wheel 8 of the one-wheel cart 700 is shifted about 10 cm backward. Thus, the center of gravity of the one-wheel cart 700 is shifted backward, and this reduces the load placed on the handle 6. Accordingly, as the position of a main body angle is raised, the position of a step 10 is lowered. In order to maintain a balance between the position of the wheel 8 and the height of the step 10, the right and left step 10 is extended about 5 cm by adding extended step 10A thereto, and the height of the step 10 is extended about 5 cm.

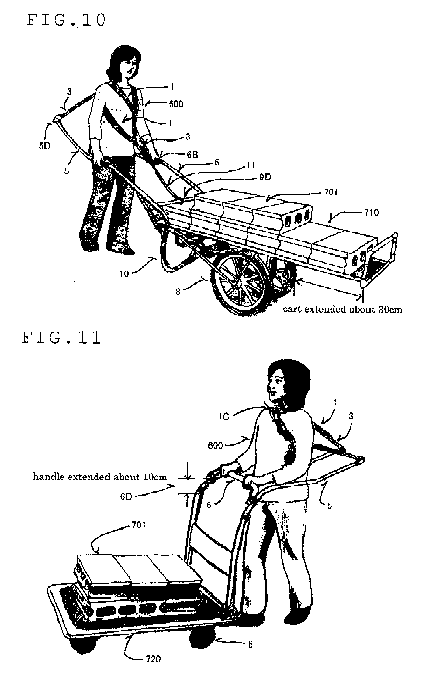

As shown in FIG. 10, the shoulder-belt-traction hand-push tool may be composed of a two-wheel cart 710. The two-wheel cart 710 is stable in a lateral direction as compared with the one-wheel cart 700, and thus it can hold a large number of blocks 701 (load). Like the one-wheel cart 700, the position of a wheel 8 is located in the forward middle portion of the body of the two-wheel cart 710. Also, it is possible to prevent the load of the blocks 701 (load) from being placed on the handle 6 due to the change of the center of gravity thereof. Further, since the wheel 8 is larger than a conventional four-wheel cart, the two-wheel cart 710 can be handled even when a road surface is in bad condition. The two-wheel cart 710 is pulled by the tension bar 5 of both supports and a shoulder belt I, and thus a load produced by a hand-push operation is not placed on both hands of the user, and it is possible to comfortably operate the two-wheel cart 710. As a structure, the supporting tension bar 5 of the pipe member is inserted into the handle grip portion 6B of the two-wheel cart 710.

Since the two-wheel cart 710 can hold a large number of blocks 701 (load) and the weight of the two-wheel cart 710 and the blocks 701 (load) are directly placed on both arms holding the handle grip portion 6B when the two-wheel cart 710 moves down on a slope, there is the risk that the hands may slip and separate from the handle 6. In order to overcome this problem, one end of a lead 11, namely, a sub-belt for a slope is linked to the shoulder belt 1 through a shock absorption spring 3, and the other end of the lead 10 is connected to the rear pipe angle 9D of the two-wheel cart 710. Thus, the weight of the two-wheel cart 710 and the blocks 701 (load) is placed on the body of the user 600 through the shoulder belt 1, with the result that the load placed on both arms is eliminated even when the two-wheel cart 710 moves down a slope and the user 600 only controls the two-wheel cart 710.

As shown in FIG. 11, the shoulder-belt-traction hand-push tool may be composed of a four-wheel cart 720. Conventionally, four-wheel carts are used in the transportation industry in general, but by employing the four-wheel cart 720 of the shoulder-belt-traction hand-push tool system, it is possible to easily transport a load. Further, when the four-wheel cart 720 is made compact by using folding the tension bar 5, it can be used in a town and inside a building. Also, since a conventional four-wheel cart is a hand-push type, the position of the handle is set low and thus the user leans forward in an uncomfortable posture, but as the four-wheel cart 720 of the shoulder-belt-traction hand-push tool system is pulled by a shoulder belt 1, and the user is freed from an uncomfortable posture, and the position of the handle 6 can be extended about 10 cm. As a structure, the handle 6 of the pipe member of the four-wheel cart 720 is cut on the right and left sides, and the tension bar 5 of both supports of the pipe member is inserted into the opening hole. The other portion of the handle 6 of the pipe member is attached to the position where the tension bar 5 is located when it is extended about 10 cm.

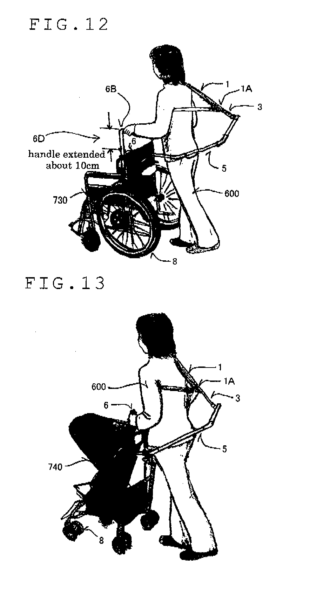

As shown in FIG. 12, the shoulder-belt-traction hand-push tool may be composed of a wheelchair 730. Wheelchairs arc used in various places, such as, on a road, indoors and outdoors, but by employing the wheelchair 730 of the shoulder-belt-traction hand-push tool system, it is possible to operate easily even when moved on a bumpy road or the like. As a structure, the supporting tension bar 5 of the pipe member is attached to the handle grip portion 6B of the wheelchair 730. Due to the shoulder belt traction system, a heavy load is not placed on both arms of the user, and the handle 6 can be extended about 10 cm and the user 600 is freed from an uncomfortable posture.

As shown in FIG. 13, the shoulder-belt-traction hand-push tool may be composed of a baby carriage 740. Baby carriages have types for one baby, two babies, three babies and babies with varying weights, but it is difficult for the user 600 to operate a baby carriage by and-pushing on a bumpy road in particular. By employing the baby carriage 740 of the shoulder-belt-traction hand-push tool system, it is pulled by the body of the user 600 through a shoulder belt 1 and can be operated with light strength in a comfortable posture. As a structure, one folding supporting tension bar 5 of the pipe member or both supporting tension bars 5 are attached to the handle 6 of the baby carriage 740.

The shoulder-belt-traction hand-push tool makes it possible to reduce labor involved in a hand-push operation and frees the user from an uncomfortable posture because the shoulder-belt-traction hand-push tool is pulled through a tension bar by a shoulder bell fitted around the body of a user. Thus, it effectively reduces the labor and working hours of workers and ordinary people who work for long periods of time, so there is a large possibility of becoming popular. The shoulder-belt-traction hand-push tool can be added to currently widespread hand-push tools, and integrated products can be made at the time of production, thus, it is thought highly likely to be widely used.

## Claims

1. A shoulder-belt-traction hand-push tool comprising:
a traction tension bar of a pipe member, the traction tension bar being attached to an end of a support bar or a handle of the hand-push tool;
a tension bar ring metal member of a ring-shaped metal member, disposed at an end of the tension bar extending backward; and
having a shoulder belt that can be fitted around a body of a user connected to the tension bar ring metal member through a shock absorption spring by an attachment hook,
configured wherein the user fits the shoulder belt around the body, holds the support bar or the handle of the hand-push tool with both hands, leans forward and puts their weight into the shoulder belt to produce traction, and then starts to walk while putting their weight into the shoulder belt such that the hand-push tool is pulled.

2. The shoulder-belt-traction hand-push tool of claim 1,
wherein the support bar or the handle of the hand-push tool is extended about 10 cm.

3. The shoulder-belt-traction hand-push tool of claim 1 or claim 2,
wherein the hand-push tool is composed of a hand-push snow removal tool.

4. The shoulder-belt-traction hand-push tool of claim 1 or claim 2,
wherein the hand-push tool is composed of a cleaning mop or a water removal wiper, and further comprises a side bar handle provided between a support bar of the scoop type snow shovel, the cleaning mop or the water removal wiper and the tension bar, so as to control a direction thereof when a snow removal operation or a cleaning operation is performed while the user is walking.

5. The shoulder-belt-traction hand-push tool of claim 1 or claim 2,
wherein the hand-push tool is composed of a hand-push lawnmower.

6. The shoulder-belt-traction hand-push tool of claim 1 or claim 2,
wherein the hand-push tool is composed of a hand-push cart.

7. The shoulder-belt-traction hand-push tool of claim 6,
wherein the hand-push tool is composed of a one-wheel cart, and a wheel is shifted about 10 cm backward with respect to a position of the bucket of the one-wheel cart such that the center of gravity of the one-wheel cart is shifted backward.

8. The shoulder-belt-traction hand-push tool of claim 6,
wherein the hand-push tool is composed of a two-wheel cart, and has a lead with one end thereof linked to the shoulder belt and the other end thereof connected to a rear portion of the two-wheel cart so as to prevent the hands from being separated from the handle of the two-wheel cart on a slope.

9. The shoulder-belt-traction hand-push tool of claim 6,
wherein the hand-push tool is composed of a four-wheel cart.
